# EUROPEAN PATENT APPLICATION

(11) **EP 4 026 618 A1**
(43) Date of publication of application: **13.07.2022**
(21) Application number: 19944512.3
(22) Date of filing: 03.09.2019
(51) Int. Cl.: B02C 17/22, B02C 23/00, B23P 19/04, B23P 19/06, B25J 19/00

(54) **AUTOMATIC DEVICE OR TOOL FOR REMOVING AND INSTALLING MEANS FOR FASTENING LINERS IN A MILL; METHOD FOR INSTALLING THE MEANS FOR FASTENING A LINER; AND METHOD FOR REMOVING THE MEANS FOR FASTENING A LINER**

(71) Applicant: Mi Robotic Solutions S.A., Santiago, 7650672 (CL)
(72) Inventor: ELIAS CABRERA, Igor Sebastián, Santiago, 7650672 (CL); POBLETE GUTIÉRREZ, Mario Francisco, Santiago, 7650672 (CL)
(74) Representative: ABG Intellectual Property Law, S.L.
(86) International application number: PCT/CL2019/050084
(87) International publication number: WO 2021/042221

(57) **Abstract**

The invention relates to an automatic device or tool (1) for removing and installing means for fastening liners in a mill, the configuration thereof allowing the performance of a task involved in the removal and/or insertion of the means for fastening the liner, such as cleaning, lubrication, installation, loosening, removal, tightening, and final torque application, by means of automatic operation and remote actuation, comprising at least one base structure or frame (2), a torque actuator and a transmission system (3) formed by a die (4) coupled by means of a movable coupling (5) to a drive shaft (6) of a torque actuator (7), such that said configuration allows the die (4) to move axially, thereby enabling a nut to be inserted into the die (4) automatically, and at least one washing and lubrication system (9) formed in the front area (8) of the arrangement of the die (4), which allows the threads of the fastening means to be washed and lubricated, using the same device or tool (1) of the invention.

## Description

### SPECIFICATION

### FIELD OF THE INVENTION

The present invention relates to devices, tools, and/or methods which are used for removing and inserting means for fastening wear elements, such as liners or shields, which are arranged on the surface of the mill casing for ore grinding in the mining industry.

The invention preferably relates to an automated device or tool for removing and/or fastening means for fastening a liner or shield in a mill, such as for example a nut and/or bolt, the configuration thereof allowing an automated process for removing, inserting, and fastening said nut, without requiring the intervention of maintenance staff in the actuation and manipulation of said device or tool, such that the liner changing process is optimised, ensuring a correct installation and removal of said fastening elements in each liner which will be changed, achieving a greater degree of certainty and efficacy, therefore optimising the time that the mill is halted for maintenance, unscheduled halting for repair as a result of a poorly performed process, and preventing the exposure of maintenance staff to the risks associated with this type of method.

### BACKGROUND OF THE INVENTION

Removal of fastening elements for fastening liners in a mill in order to change same is a highly repetitive process given the need to use a large number of fastening elements to enable correctly and safely fastening the large number and variety of liners comprised inside the mill casing.

Liners are subjected to constant wear due to the impact of ore and grinding means thereon, so they must be changed periodically. In the art, the changing of liners requires the use of tools or devices that are usually operated by staff directly in the changing area to help in positioning, guiding, fastening, and/or loosening the liners, with this being a high-risk process for the staff involved in the changing operation, as well as incurring a great deal of time associated with the maintenance operation.

Liners are installed on the inner surface of the mill, having a different configuration, size, and shape according to their location, being fastened and/or secured by fastening means that are usually formed by a bolt which is inserted into an opening of the liner and the shell of the mill, such that a threaded end of said bolt projects outwardly from the shell of the mill in the outer portion thereof to allow the arrangement of a sealing element, such as a washer or vulcanised washer, and a tightening element, such as a nut, which is tightened with the required torque, which is usually high, in order to tighten and therefore safely fasten the liner to the inner surface of the shell of the mill, and providing the necessary seal to prevent pulp leakages from inside the mill through said fastening means.

The liner changing method is usually performed with tools operated by maintenance staff to perform a task involved in said change, such as using tools which allow loosening and removing nuts and/or bolts, tools or elements which allow removing washers, tools for pushing the bolts into the mill, tools for removing liners from their location inside the mill, and where for the liner installation, each of said indicated steps must be performed but in the reverse order.

One of the most time-consuming steps in the liner changing process relates to loosening, removing, inserting, and tightening nuts with respect to the threaded rod of the bolt for holding and fastening liners which is exposed on the outside of the mill, due to the need for a large number of staff members given the need to loosen a large number of fastening means comprised in the large number of liners used in a mill, as well as tools indicated for loosening the nut in each of the different types of existing mills, and the number of various tasks that must be performed in the removal and insertion of a fastening means for fastening a liner.

Since fastening means are exposed to adverse environments, the threaded area thereof is usually manually cleaned and lubricated by means of a brush or pieces of cloth to facilitate subsequent removal or insertion in the fastening means installation process, the nut or bolt is manually pre-installed in the arrangement to be fastened in order to proceed with pre-tightening using a tool, normally an impact tool, such as a pneumatic tool, to then proceed to final torquing with a torquing tool, which can be a hydraulic or electric tool. To perform the fastening means removal process, after cleaning and lubrication, the other steps are performed inversely to loosen a nut or bolt.

Since each of the steps in the process for removing and installing fastening means for fastening a liner for changing same is performed by a large number of staff members, with a large number of different tools, and under extreme working conditions, the scheduled halting time is often extended, causing the process to be less efficient; however, in many cases, in order to comply with said schedule, the large number of maintenance staff members who perform said method do not optimally perform each of the various steps or tasks for removing or installing the fastening means for fastening a liner, which often leads to system failures, such as leakages due to the loss of sealing and detachment of the liners, resulting in subsequent unscheduled halting for repair. The adverse conditions in which said method is performed by the staff increase the risk of accidents.

A series of devices, tools, and methods have been developed and implemented in the art for the purpose of solving problems associated with the removal and insertion of fastening means when changing a liner of a mill, such as that described in national application 2642-2005 (MI ROBOTIC SOLUTIONS S.A.), with publication date 01/06/2007, and corresponding to National Registration 49044, which describes a robot-assisted method for the process of removing bolts from SAG mills, which method in turn comprises providing a robotic arm with at least 5 degrees of freedom, grabbing a nut cutting tool from a tool carrier rack, cutting or loosening the nut, and grabbing a tool for removing bolts to knock a securing bolt out of the mill. This document does not specify the shape and structural configuration of the tools, only describing that the robotic arm grabs a tool for cutting or loosening the nut and a tool for removing bolts, only indicating that it corresponds to hydraulic equipment; additionally, it describes that the tool carrier rack also comprises a torque wrench and tools for tightening and loosening bolts.

On the other hand, national application 201702310 (IVAN JORGE PEREZ GUTIERREZ), with filing date 12/09/2017, describes a system for removing and tightening bolts for mill liners comprising a rail fastened to an operating platform, a mobile and swivelling support which can adopt different positions along the rail, allowing the wrench to be positioned facing several bolt paths depending on the position adopted by the mobile and swivelling support, wherein the wrench which applies torsion to the bolt is a motor wrench with a planetary gear, with the actuation motor being an electric motor, a hydraulic motor, a pneumatic motor, a motor with a toothed ratchet or a friction ratchet. Although the invention does describe a tightening system in which there are provided means which allow facilitating the ability of the torsion tool to move to the different points where the process of removing and tightening the bolts of a liner in a mill is to be performed, the system, however, still contemplates the manual operation of the wrench to apply pressure until the relief valve of the hydraulic unit cuts off power supply to the motor.

An apparatus and a method for removing quick-removal nuts is disclosed in national application 201700082 (DESARROLLO Y OPTIMIZACION DE SISTEMAS PRODUCTIVOS S.A.), with filing date 12/01/2017, the configuration thereof allowing a quick-removal nut to be disassembled and dismantled in a quick and efficient manner, wherein the apparatus comprises a hydraulic cylinder which has a nut supported on the end of the bolt, in addition to two jaws enveloping the outer body of the nut from the base which, when the jaws move closer together and the hydraulic cylinder is actuated, remove said outer body, whereby the pins and the split bushing of the hollow inner body move out of position, dislodging the nut and releasing the end of the bolt, maintaining the attachment of the drum of the mill with the inner liner. Although this proposed solution does indeed facilitate the removal of a fastening means for fastening a liner in a mill, it, however, requires the direct manipulation of maintenance staff given the need to position the hardened sleeve of the apparatus securely at the end of the bolt so as to actuate a crank by rotating it, allowing the actuation of the jaws to close around the nut and close the jaws, to the operator subsequently having to operate the hydraulic cylinder which is removed from the nut when the rod moves the outer body of the nut.

Application CL 201502262 (RUSSEL MINERAL EQUIPMENT PTY), filed on 23/08/2015 and a member of the patent family of document WO2014/124491 with publication date 21/08/2014, describes an apparatus for suspending and guiding a tool externally of a grinding mill, wherein said apparatus provides four or less degrees of freedom to said at least one tool, and wherein at least one of said degrees of freedom is an angular movement about the axis of rotation of said mill, wherein the apparatus comprises a first curved rail arranged outside and at least partially surrounding a part of the body of said mill, a first primary carriage installed for travel along said curved rail, and a first tool carriage coupled to the first primary carriage, wherein said at least one tool in installed in said tool carriage by means of a first slide mechanism for axial movement thereof. The objective of the configuration described by Russell is to enable a tool of a mill to be suspended and guided externally along a curved path, which may correspond to the curvature of the body of the mill.

The fact that the suspension of tools, actuation through sliding along rails, and/or telescopic arms, as well as the manual operation of more than one tool in more than one of the tasks involved in the removal and installation of the fastening elements for fastening the liner in a mill, are contemplated in the solutions described in the prior art leads to errors in the method, such as for example, poor tool alignment, poor operation, among others, which, given the large number of staff members required to perform the process, makes the process less efficient and more risky.

Therefore, there is a need in the art to provide a tool or device for installing and/or uninstalling at least one fastening element or means for fastening and/or holding mill liners, the configuration thereof allowing the performance of a task involved, such as cleaning, lubrication, installation, loosening, removal, tightening, and final torque application, by means of the same device without having to use different tools to perform said task, and wherein said device is operated in an automated and remote manner, in such a manner so as to prevent the intervention of maintenance staff in order to prevent errors normally produced in the systems, apparatus, devices, tools, and method used in the state of the art.

### SUMMARY OF THE INVENTION

The object of the present invention relates to providing a device or tool the configuration thereof allowing the performance of all the tasks involved in the removal and installation of fastening means for fastening liners in mills, such as nuts and/or bolts, in an automatic and remote manner with the same device or tool, without the intervention of maintenance staff.

Another objective of the invention relates to providing an automatic device or tool for removing and installing fastening means for fastening liners in a mill, such as nuts and/or bolts, which allows said method to be performed in more than at least one fastening means at the same time with the same device or tool.

The invention relates to an automatic device or tool (1) for removing and installing fastening means for fastening liners in a mill, such as nuts and/or bolts, comprising a base structure or frame (2), more than one torque actuator and transmission system (3) formed by a die (4) coupled by means of a movable coupling (5) to a drive shaft (6) of a torque actuator (7), such that said configuration allows the die (4) to move axially, thereby enabling a nut to be inserted into the die (4) automatically, and at least one washing and lubrication system (9) formed in the front area (8) of the arrangement of the die (4), which allows the threads of the fastening means to be washed and lubricated, using the same device or tool (1) of the invention.

In one embodiment of the invention, the device or tool (1) may comprise at least one sensor, such as at least one position sensor (11) which allows determining the effective distance of the torque actuators and transmission system (3) with respect to one another and to the frame in order to access the different positions of the fastening means for fastening different liners comprised in the mill, and/or at least one alignment sensor (12) which allows verifying whether the bolt and/or nut is in the correct position or axially or radially shifted in an incorrect position with respect to the die (4), and/or at least one cleaning and lubrication sensor (13) which allows verifying the position of the die with respect to the nut and/or bolt in order to activate the cleaning and lubrication task, and/or at least one loosening, tightening, and/or torque sensor (14) which allows verifying the action of each of said tasks.

With the configuration of the automatic device or tool (1) for removing and installing fastening means for fastening liners in the mill of the present invention, more than one holding means can be removed and/or fastened at the same time with the same tool, and where it furthermore allows a task involved in the removal and/or insertion of the fastening means for fastening liners to be performed with the same device, such as cleaning, lubrication, installation, loosening, removal, tightening, and final torque application, by means of automatic operation and remote actuation, thereby providing a remotely-actuated automated device or tool which allows ensuring the quality, certainty, and effectiveness of the process, therefore optimising the time that the mill is halted for maintenance, and preventing the exposure of maintenance staff to the risks associated with this type of method.

### DESCRIPTION OF THE DRAWINGS

In order to help to better understand the features of the invention according to a preferred practical embodiment thereof, a set of drawings is attached as an integral part of the description in which the invention is depicted in an illustrative and non-limiting manner.
Figure 1 corresponds to an isometric view of the device of the present invention.
Figure 2 corresponds to an isometric view showing in detail the torque transmission system of the device of the present invention.
Figure 3 corresponds to a top plan view of the device of the present invention.
Figure 4 corresponds to a top plan view showing a detail of at least one washing and lubrication system comprised in the device of the present invention.
Figure 5 corresponds to a front view of the device of the present invention.

### PREFERRED EMBODIMENT OF THE INVENTION

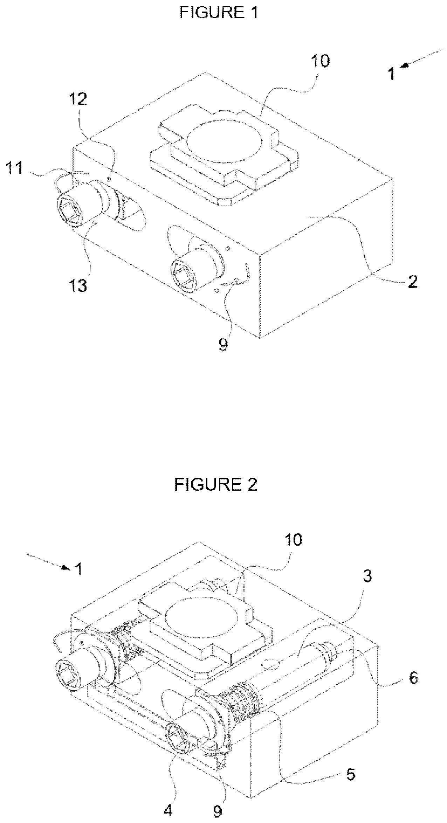

The invention relates to an automatic device or tool (1) for removing and installing fastening means for fastening liners in a mill, such as nuts and/or bolts, which is illustrated by way of example in Figure 1; the device or tool comprises a base structure or frame (2) housing the necessary elements which allow operating the system of the device, at least one torque actuator and transmission system (3), preferably, two torque actuators and transmission system (3) are arranged in the frame to perform the removal or installation process in more than one fastening means at the same time with the same tool (1), wherein the torque actuator and transmission system (3) corresponds to a mechanical system which allows generating and transmitting to a die (4) the high torque needed for removal or installation.

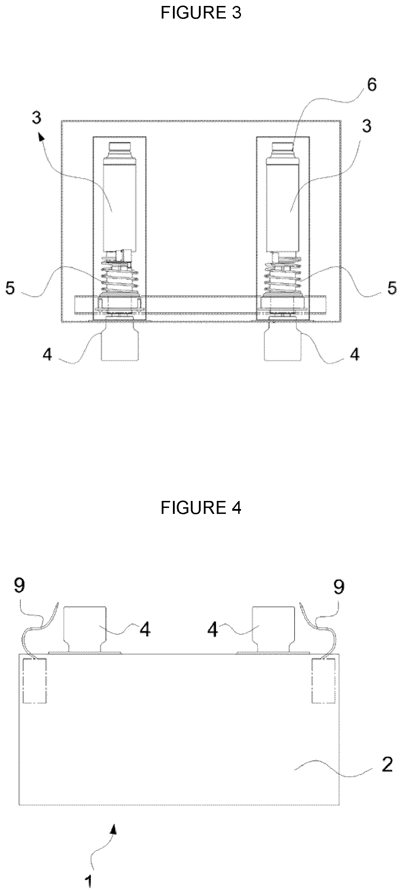

Each at least one torque actuator and transmission system (3) is formed by a die (4) coupled by means of a movable coupling (5) to a drive shaft (6) of a torque actuator (7), which is illustrated by way of example in Figures 2 and 3, such that said configuration allows the die (4) to move axially, thereby enabling a nut to be inserted into the die (4) automatically. The drive shaft (6) coupling the torque actuator (7) to the die (4) allows, at the same time, coupling the nut and/or bolt of the fastening means to be removed or installed and transmitting the torque needed to install or uninstall said fastening means with respect to same.

A washing and lubrication system (9) which allows the threads of the fastening means to be washed and lubricated using the same device or tool (1) of the invention is formed in the front area (8) of the arrangement of the die (4). The frame (2) comprises a coupling element (10) which allows coupling and/or fastening the device or tool (1) in manipulation means, such as preferably a robotic manipulator, for example.

In a preferred embodiment of the invention, the device or tool (1) may comprise a plurality of torque actuator and transmission system (3) arranged in the frame (2) having a configuration which allows the relative position thereof to be adjusted so as to thereby align the dies (4) thereof to the positions of the fastening means, i.e., the nut and/or bolts of each liner, which can be performed interchangeably by mechanical screw actuation, rack and pinion, or else a hydraulic or electric linear actuator.

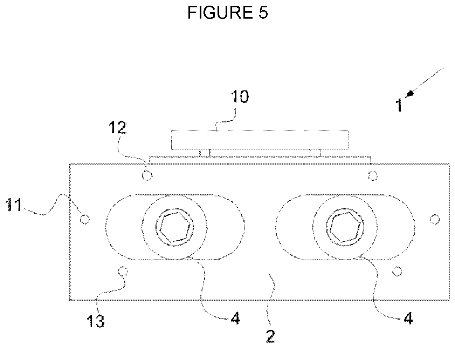

In an embodiment of the invention, the automatic device or tool (1) for removing and installing fastening means for fastening liners in the mill may comprise at least one sensor (Figures 1 and 5), such as at least one position sensor (11) which allows determining the effective distance of the torque actuators and transmission system (3) with respect to one another and to the frame in order to access the different positions of the fastening means for fastening different liners sharing the mill, and/or at least one alignment and coupled die sensor (12) which allows verifying whether the bolt and/or nut are in the correct position or axially or radially shifted in an incorrect position with respect to the die and coupled to said die (4), and/or at least one cleaning and lubrication sensor (13) which allows verifying the position of the die with respect to the nut and/or bolt in order to activate the cleaning and lubrication task, and/or at least one loosening, tightening, and/or torque sensor (14) which allows verifying the action of each of said tasks, and/or at least one free die sensor (15) which allows verifying that the die is not in the position fitted with the bolt and/or nut, and a revolution sensor (16).

The automatic device or tool (1) for removing and installing fastening means for fastening liners in the mill, such as nuts and/or bolts, may comprise a control system which allows operating and controlling said device for changing the liners of the present invention, having the function of providing power and controlling the device in communication with the manipulator to which it is attached, furthermore having monitoring controls. The control system has at least one switchgear or SG, control panel or CP, control cabinets, position detection panel PDP and human-machine interface or HMI, hydraulic installation, inductive sensors, encoder, among other control means.

The method for installing fastening means for fastening a liner, i.e., a nut and/or bolt, is performed by means of moving the automatic device or tool (1) for removal and installation by means of an automatic manipulator, such as a robotic manipulator, for example, to a system for feeding the holding means, washer, nut, and/or bolts, which are arranged in the dies (4), once said task is performed, the manipulator brings the device or tool (1) to its working position, arranging the holding means facing and in alignment with the openings of the mill in which installation will be performed. The manipulator moves the holding means closer to the corresponding installation thread, at which time said means are washed and lubricated by the washing and lubrication system (9), the manipulator subsequently moves the device or tool (1) forward until the pre-insertion of the threads is achieved, while applying torque to the dies (4) by means of the torque actuator (7) which applies torque until the moment in which the number of turns or rotations and the pre-programmed torque level for the task are achieved.

The method for removing fastening means for fastening a liner, i.e., a nut and/or bolt, is performed by means of moving the manipulator with the device or tool (1) fastened thereto until the dies (4) are arranged facing the holding means which must be removed, the manipulator moves the dies (4) closer to the holding means, at which time these means are washed and lubricated through the activation of the washing and lubrication system (9), the manipulator moves the dies (4) forward until achieving the complete insertion thereof into the holding means, the device or tool (1) generates a torque in the direction which allows removing the holding means from their working points, the manipulator moves the device or tool (1) to a location away from the uninstallation point, where the removed fastening means will finally be arranged.

In one embodiment of the invention, the automatic device or tool (1) for removing and installing fastening means for fastening a liner in the mill may comprise detection means for detecting the position of the fastening means for fastening liners configured by at least one machine vision system which is based on machine vision techniques by means of using laser triangulation cameras (L) through which scanning of the mantle of the surface of the mill is performed to determine the position in which the fastening means should be inserted or from which they should be removed, said machine vision system being capable of delivering the distance and angle of the succession of holes, so that the manipulator can make a decision concerning insertion, removal, and/or approach.

The configuration of the automatic device or tool (1) for removing and installing fastening means for fastening liners in the mill allows more than one holding means to be removed and/or fastened at the same time with the same tool, and where it furthermore allows a task involved in the removal and/or insertion of the fastening means for fastening liners to be performed with the same device, such as cleaning, lubrication, installation, loosening, removal, tightening, and final torque application, by means of automatic operation and remote actuation, thereby preventing the use of more than one tool for performing the entire method, as well as preventing manipulation by maintenance staff, making the process of removing and inserting holding and/or fastening means for holding and/or fastening liners in a mill more effective, faster, of better quality, and less risky, obtaining a more efficient and safer process.

Although the configuration of the automatic device or tool (1) for removing and installing fastening means for fastening liners in the mill herein described constitutes a preferred inclusion of this invention, it must be understood that the invention is not limited to this specific form of the system for changing the liner, given that changes can be made therein without departing from the scope of the invention defined in the attached claims.

## Claims

1. Automatic device or tool (1) for removing and installing means for fastening liners in a mill, **CHARACTERISED in that** it comprises at least one base structure or frame (2), more than one torque actuator and transmission system (3) formed by a die (4) coupled by means of a movable coupling (5) to a drive shaft (6) of a torque actuator (7), such that said configuration allows the die (4) to move axially, thereby enabling a nut to be inserted into the die (4) automatically, and at least one washing and lubrication system (9) formed in the front area (8) of the arrangement of the die (4), which allows the threads of the fastening means to be washed and lubricated, using the same device or tool (1) of the invention.

2. Automatic device or tool (1) for removing and installing means for fastening liners in a mill according to claim 1, **CHARACTERISED in that** it comprises a plurality of torque actuator and transmission system (3) arranged in the frame (2) having a configuration which allows the relative position thereof to be adjusted so as to thereby align the dies (4) thereof to the positions of the fastening means, i.e., the nut and/or bolts of each liner, which can be performed interchangeably by mechanical screw actuation, rack and pinion, or else a hydraulic or electric linear actuator.

3. Automatic device or tool (1) for removing and installing means for fastening liners in a mill according to claims 1 and/or 2, **CHARACTERISED in that** it may comprise at least one sensor, such as at least one position sensor (11) which allows determining the effective distance of the torque actuators and transmission system (3) with respect to one another and to the frame in order to access the different positions of the fastening means for fastening different liners comprised in the mill, and/or at least one alignment sensor (12) which allows verifying whether the bolt and/or nut is in the correct position or axially or radially shifted in an incorrect position with respect to the die (4), and/or at least one cleaning and lubrication sensor (13) which allows verifying the position of the die with respect to the nut and/or bolt in order to activate the cleaning and lubrication task, and/or at least one loosening, tightening, and/or torque sensor (14) which allows verifying the action of each of said tasks.

4. Automatic device or tool (1) for removing and installing means for fastening liners in a mill according to the preceding claims, **CHARACTERISED in that** it may further comprise a control system, having the function of providing power and controlling the device in communication with the manipulator to which it is attached, furthermore having monitoring controls, and having at least one switchgear or SG, control panel or CP, control cabinets, position detection panel PDP and human-machine interface or HMI, hydraulic installation, inductive sensors, encoder, among other control means.

5. Automatic device or tool (1) for removing and installing means for fastening liners in a mill according to the preceding claims, **CHARACTERISED in that** it may further comprise detection means for detecting the position of the fastening means for fastening liners configured by at least one machine vision system which is based on machine vision techniques by means of using laser triangulation cameras (L).

6. Method for installing means for fastening a liner, i.e., a nut and/or bolt, performed by means of moving the automatic device or tool (1) for removal and installation by means of an automatic manipulator to a system for feeding the holding means, washer, nut, and/or bolts, which are arranged in the dies (4), **CHARACTERISED in that** it comprises, once said task is performed, the manipulator bringing the device or tool (1) to its working position, arranging the holding means facing and in alignment with the openings of the mill in which installation will be performed, the manipulator moving the holding means closer to the corresponding installation thread, at which time said means are washed and lubricated by the washing and lubrication system (9), the manipulator subsequently moving the device or tool (1) forward until the pre-insertion of the threads is achieved, while applying torque to the dies (4) by means of the torque actuator (7) which applies torque until the moment in which the number of turns or rotations and the pre-programmed torque level for the task are achieved.

7. Method for removing means for fastening a liner, i.e., a nut and/or a bolt, performed by means of moving the manipulator with the device or tool (1) fastened thereto until the dies (4) are arranged facing the holding means which must be removed, **CHARACTERISED in that** the manipulator moves the dies (4) closer to the holding means, at which time these means are washed and lubricated through the activation of the washing and lubrication system (9), the manipulator moves the dies (4) forward until achieving the complete insertion thereof into the holding means, the device or tool (1) generates a torque in the direction which allows removing the holding means from their working points, the manipulator moves the device or tool (1) to a location away from the uninstallation point, where the removed fastening means will finally be arranged.
